(19) Europäisches Patentamt

European Patent Office

Office européen des brevets

(11) **EP 1 608 116 A1**

(12) **EUROPEAN PATENT APPLICATION**

(43) Date of publication:
**21.12.2005 Bulletin 2005/51**

(51) Int Cl.[7]: **H04L 12/56**

(21) Application number: **05250625.0**

(22) Date of filing: **04.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **18.06.2004 US 871440**

(71) Applicant: **Agere Systems, Inc.**
**Allentown, PA 18109 (US)**

(72) Inventors:
 • **Hamilton, Christopher W.**
  **Breinigsville PA 18031 (US)**

 • **Pathak, Pravin K.**
  **Iselin, NJ 08830 (US)**
 • **Bordogna, Mark A.**
  **Andover MA 01810 (US)**
 • **Kataria, Deepak**
  **Edison, NJ 08817 (US)**
 • **Simkins, Mark B.**
  **Lower Macungie Township, PA 18062 (US)**

(74) Representative: **Williams, David John et al**
  **Page White & Farrer,**
  **54 Doughty Street**
  **London WC1N 2LS (GB)**

(54) **Method and apparatus for per-service fault protection and restoration in a packet network**

(57)    A method and apparatus are disclosed for per-service flow protection and restoration of data in one or more packet networks. The disclosed protection and restoration techniques allow traffic to be prioritized and protected from the aggregate level down to a micro-flow level. Thus, protection can be limited to those services that are fault sensitive. Protected data is duplicated over a primary path and one or more backup data paths. Following a link failure, protected data can be quickly and efficiently restored without significant service interruption. A received packet is classified (420) at each end point based on information in a header portion of the packet, using one or more rules that determine whether the received packet should be protected (430). At an ingress node (400), if the packet classification determines that the received packet should be protected, then the received packet is transmitted on at least two paths (440). At an egress node (500), if the packet classification determines that the received packet is protected, then multiple versions of the received packet are expected and only one version of the received packet is transmitted (550).

FIG. 4

**Description**

**Field of the Invention**

The present invention relates generally to fault protection and restoration techniques and, more particularly, to fault protection and restoration techniques in a packet network, such as a converged access network.

**Background of the Invention**

There is a strong trend towards service convergence in access networks. Such networks are typically referred to as "converged networks." Such convergence is motivated, at least in part, by the promise of reduced equipment and operating expenses, due to the consolidation of services onto a single access platform and consolidation of separate networks into a single multi-service network.

A network operator is currently required to maintain a variety of access "boxes" (equipment) in order to support multiple services. For example, voice services may be deployed via a Digital Loop Carrier (DLC), while data service may be deployed via a DSL Access Mux (DSLAM). Furthermore, the networks on which this traffic is carried may be completely distinct. It is recognized that the consolidation of equipment and networks can save money. Furthermore, provisioning all services from a single platform (referred to herein as a multi-service access node (MSAN)) can also enable enhanced services that were not previously economically or technically possible. One of the barriers to convergence, however, has been the fact that, historically, data networks have not provided an acceptable quality of service (QoS) for time-sensitive and mission critical services, such as voice and video.

A key component of any QoS scheme is the ability to provide a reliable connection. In other words, the network must provide resiliency mechanisms in the event of a network fault, such as a fiber cut or a node failure. For time sensitive services, the network must typically provide rapid restoration of the affected service on the order of tens of milliseconds. Moreover, in addition to time sensitivity, there can be services that are sensitive to faults for a variety of reasons (packet loss sensitivity, etc.). Services that are sensitive to such faults are generally referred to as "fault sensitive services" herein. Deploying a converged platform requires the capability to provision time-sensitive services, such as primary voice, with service levels that are "carrier-grade." At the same time, this must be done economically in order to make the services viable for the provider.

Current devices in packet oriented access networks provide few, if any, choices in the available protection mechanisms. Instead, an access data device typically relies on an adjacent router, switch or SONET add-drop multiplexer (ADM) to provide protection of the traffic. However, these schemes are not always as flexible, efficient or economical as required. For example, it may be desirable to protect only a small amount of the total data traffic being provided to the network core. In such a case, protecting all the data from an MSAN (using, for example, a protection scheme based on a SONET uni-directional path switching ring (UPSR)) may not be economical, since only a fraction of the data may require fast restoration.

In addition, currently available methods of fault detection and network recovery for packet networks are often not fast enough. For example, an Ethernet network can use Spanning Tree Protocol (STP) or Rapid STP to route around a faulty path, but the upper bound of the convergence time of the protocol can be too high. Furthermore, such Spanning Tree Protocol mechanisms can operate only at the granularity of a port or virtual local area network (VLAN), while only a fraction of the data on the VLAN may require protection and restoration.

A need therefore exists for methods and apparatus for protecting and restoring data that can selectively protect and restore data on the aggregated or individual service flow level. A further need exists for methods and apparatus for protecting and restoring data that can provide sufficiently rapid restoration of the affected service to satisfy the requirements of fault sensitive services. A further need exists for methods and apparatus for protecting and restoring data in an existing network independent of the packet transport protocol or physical transport topology.

**Summary of the Invention**

Generally, a method and apparatus are disclosed for per-service flow protection and restoration of data in one or more packet networks. The disclosed protection and restoration techniques allow traffic to be prioritized and protected from the aggregate level down to a micro-flow level. Thus, protection can be limited to those services that are fault sensitive. Protected data is duplicated over a primary path and one or more backup data paths. Following a link failure, protected data can be quickly and efficiently restored without significant service interruption.

At an ingress node, a received packet is classified based on information in a header portion of the packet. The classification is based on one or more rules that determine whether the packet should be protected. If the packet classification determines that the received packet should be protected, then the received packet is transmitted on at least two paths. At an egress node, a received packet is again classified based on information in a header portion of the packet, using one or more rules. If the packet classification determines that the received packet is protected, then multiple versions of the received packet are expected and only one version of the received packet is transmitted.

The present invention thus provides transport of critical subscriber services, such as voice and video services, with a high degree of reliability, while transporting less critical services, such as Internet access or text messaging, with a reduced level of network protection, if any. Only the endpoints of a network connection are required to implement the protection and restoration techniques of the present invention. Thus, the protection and restoration techniques of the present invention can be implemented in existing networks and can provide protection for flows that traverse multiple heterogeneous networks, independent of the packet transport protocol or physical transport topology.

A more complete understanding of the present invention, as well as further features and advantages of the present invention, will be obtained by reference to the following detailed description and drawings.

## Brief Description of the Drawings

FIG. 1 illustrates an exemplary network environment 100 in which the present invention can operate;

FIG. 2 illustrates an exemplary subscriber environment of FIG. 1 in further detail;

FIG. 3 illustrates a connection for an exemplary subscriber hub between the multi-service access node and router of FIG. 1 in further detail;

FIG. 4 is a flow chart describing an exemplary implementation of a transmit process performed by an ingress network processor;

FIG. 5 is a flow chart describing an exemplary implementation of a receive process performed by an egress network processor;

FIG. 6 is a flow chart describing an exemplary implementation of a packet classification subroutine that is invoked by the transmit process and receive process of FIGS. 4 and 5, respectively;

FIG. 7 illustrates the scheduling and queueing of protected packets in accordance with one embodiment of the invention;

FIG. 8 illustrates the detection of a fault for protected packets in accordance with one embodiment of the invention;

FIG. 9 is a flow diagram illustrating the detection of a fault for protected packets in accordance with one specific embodiment of the invention;

FIG. 10 is a flow chart describing an exemplary fault detection process incorporating features of the present invention; and

FIG. 11 illustrates the rerouting of traffic between a source node and a destination node over a backup path following a link failure.

## Detailed Description

The present invention provides methods and apparatus for per-service flow protection and restoration of data in one or more packet networks. The disclosed per-service flow protection and restoration techniques allow traffic to be prioritized and protected from the aggregate level down to a micro-flow level using the same basic mechanisms. Thus, fault sensitive services can be protected, while less critical services can be processed using, for example, a "best efforts" approach. Generally, the per-service flow protection and restoration techniques of the present invention duplicate protected data over a primary path and one or more backup data paths. Thus, only protected data is duplicated onto a separate physical path through the access side of the network. As discussed further below, following a link failure, protected data can be quickly and efficiently restored and the service remains connected.

The present invention provides transport of critical customer services, such as voice and video services, with a high degree of reliability, while transporting less critical services, such as Internet access or text messaging, without protection or with a reduced level of network protection provided by the underlying network, for example, based on the Spanning Tree Protocol for Ethernet communications. The service-based selection of protected traffic provides efficient utilization of the available bandwidth, as opposed to techniques that required protection of all the data. The per-service flow protection and restoration techniques of the present invention provide sufficiently rapid restoration of an affected service to satisfy the requirements of fault sensitive services. In this manner, SONET-like reliability is provided in an efficient manner.

In one exemplary implementation, the per-service flow protection and restoration techniques of the present invention operate at Layer 4. Thus, only the endpoints of a network connection need to implement the protection and restoration techniques of the present invention. As a result, the present invention can be implemented in existing networks and can provide protection for flows that traverse multiple heterogeneous networks. Thus, according to a further aspect of the invention, the present invention can protect and restore data in existing networks, independent of the packet transport protocol, such as Internet Protocol (IP), Ethernet, asynchronous transfer mode (ATM) or Multi Protocol Label Switching (MPLS), or physical transport topology, such as ring or mesh network. In addition, the invention can work independently of or in conjunction with existing network resiliency mechanisms, such as ATM Private Network-Network Interface (PNNI), MPLS fast reroute or SONET Bi-directional Line Switched Ring (BLSR)/ Uni-directional Path Switched Ring (UPSR) reroute mechanisms. Thus, existing systems that may have minimal or no restoration capability, can optionally be retrofitted with the present invention to add resiliency on an incremental basis ("pay as you grow"). For example, a protected line card could be added to a legacy DSLAM.

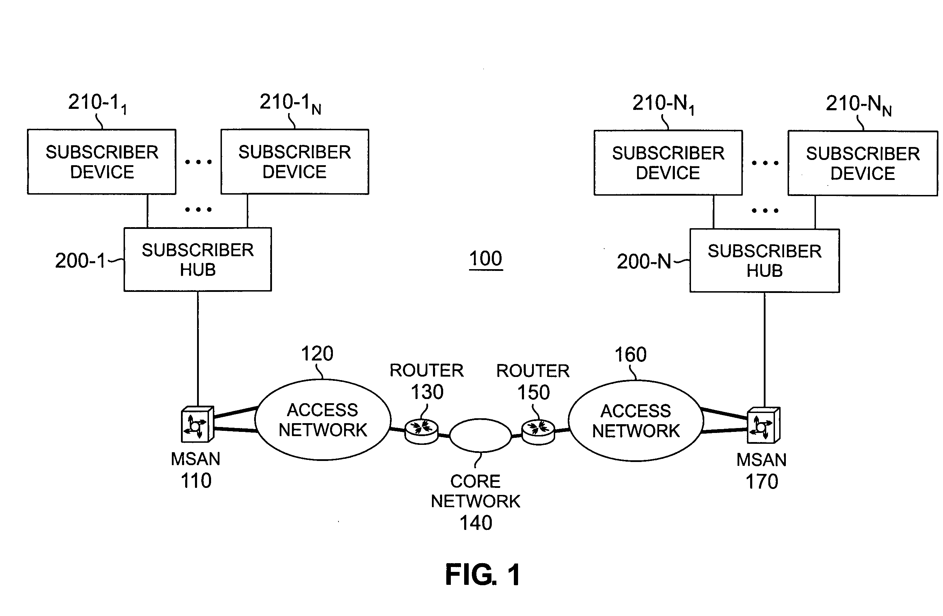

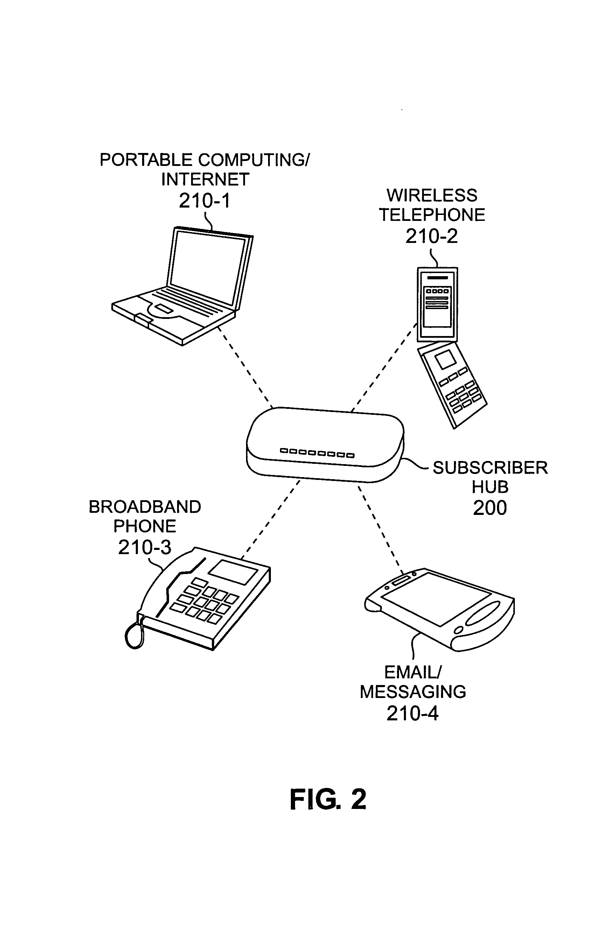

FIG. 1 illustrates an exemplary network environment in which the present invention can operate. As shown in FIG. 1, one or more subscribers each having a corresponding subscriber hub 200-1 through 200-N, discussed further below in conjunction with FIG. 2, can communicate over a network 100. Each subscriber may employ one or more subscriber devices 210-$1_1$ through 210-$1_N$ and 210-$N_1$ through 210-$N_N$, also discussed further below in conjunction with FIG. 2. Generally, all subscriber services, such as voice, video and cable, are concentrated through a home or business hub 200. Consolidated data is sent or received over a single broadband link.

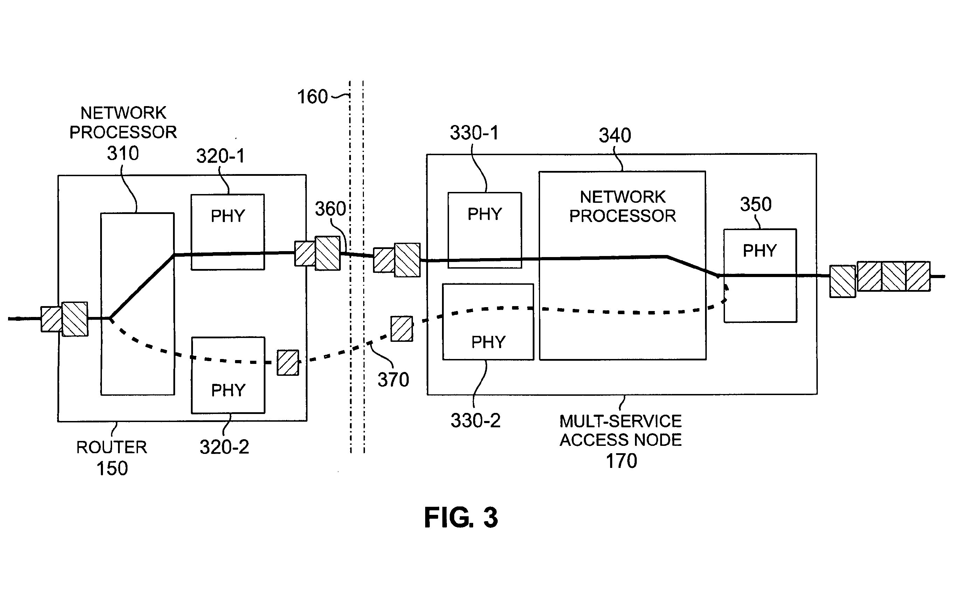

As shown in FIG. 1, the network 100 may be comprised of one or more access networks 120, 160. The access networks 120, 160 may be embodied, for example, as a ring or mesh network. It is noted that the per-service flow protection and restoration techniques of the present invention can independently be provided in one or more of the access networks 120, 160. A given subscriber accesses an associated access network 120, 160 by means of a corresponding multi-service access node (MSAN) 110, 170. The multi-service access nodes 110, 170 may be embodied, for example, using any of a plurality of next-generation broadband loop carriers (BLCs), including a Calix C7 system. As discussed further below, the multi-service access nodes 110, 170 can detect and distinguish fault sensitive services to be protected by the present invention. Each access network 120, 160 is connected to a core network 140 by means of a router 130, 150, respectively, in a known manner. The connection for an exemplary subscriber hub 200-N between the multi-service access node 170 and router 150 are discussed further below in conjunction with FIG. 3.

The core network 140 is a converged network that carries, for example, voice, video and data over a converged wireless or wireline broadband network that may comprise, for example, the Public Switched Telephone Network (PSTN) or Internet (or any combination thereof). For a single consolidated broadband network to deliver converged services, the network must be able to support a specified Quality of Service and the reliable delivery of critical information. Thus, in accordance with the present invention, the access networks 120, 160 implement traffic management techniques that provide the ability to detect, manage, prioritize and protect critical information.

As previously indicated, the present invention provides fault protection and restoration mechanisms. In a network environment, such as the network environment 100, physical disconnects can occur for many reasons, including technician errors, such as pulling out a cable or card by mistake; breaks in the physical fiber or copper links, as well as port errors within the nodes or cards.

FIG. 2 illustrates the exemplary subscriber environment of FIG. 1 in further detail. It is noted that a subscriber can be, for example, a residential or commercial customer. As shown in FIG. 2 a subscriber may employ one or more subscriber devices 210-1 through 210-N, connected to a single subscriber hub 200. For example, a subscriber may employ a portable computing device210-1, a wireless telephone 210-2, a broadband telephone 210-3 and an email or text message device 210-4. As previously indicated, the data from each of these devices 210-1 through 210-4 are aggregated by the hub 200 and provided over a single physical broadband connection to the access network 160 via the MSAN 170.

FIG. 3 illustrates the connection for an exemplary subscriber hub 200 between the multi-service access node 170 and router 150 in further detail. Generally, the present invention operates at the two endpoints of a protected flow. Consider the data flow of FIG. 3 in the direction right to left (the data flow in the opposite direction behaves in the same way, so only one direction will be considered here). The combined data flow of all services (e.g. voice, internet access, streaming audio) coming from a subscriber hub 200 and traveling through an MSAN 170 to a router 150 is indicated by a solid line, referred to as the primary path 360. As previously indicated, the per-service flow protection and restoration techniques of the present invention duplicate the protected data over the primary path 360 and one or more backup or secondary data paths 370 (indicated by a dashed line in FIG. 3).

The data from the subscriber travels into the MSAN 170, at which point a subset of the aggregate flows that is provisioned as protected flows are identified, replicated and sent out a separate port. This marks the beginning of the distinct and disjoint protected and secondary paths 360, 370 through the network. Of the total aggregate flow, a subset of flows are provisioned to be protected flows, illustrated by the packets having diagonal hashing as transmitted on the dashed secondary path 370. The duplicate protected flows are routed along a physical path 370 that is spatially diverse from the primary path 360 that the total traffic travels. It is noted that a portion of the primary and secondary paths can be dedicated to carrying duplicate protected traffic, and the remainder of the bandwidth can carry "best efforts" data (indicated in FIG. 3 by a grid hashing). For example, if ten percent (10%) of the total traffic is protected and the primary and secondary paths are of equal bandwidth, the primary and secondary paths each can carry 10% of duplicate protected traffic and 90% of unprotected traffic, for a total bandwidth utilization of 95%, compared to 50% for techniques that can not discriminate at the traffic service level and therefore require 100% of the traffic to be protected (e.g. SONET UPSR)..

As shown in FIG. 3, the MSAN 170 and router 150 are the "endpoints" of a protected flow. The MSAN 170 and router 150 each contain a network processor 340, 310, respectively, that implement the features and functions of the present invention. The MSAN 170 includes a number of physical layer interfaces (PHY) 330, 350 for interfacing with the access network 160 and subscriber hub 200, respectively. The router 150 includes a number of physical layer interfaces (PHY) 320 for interfacing with the access network 160 and the core network 140.

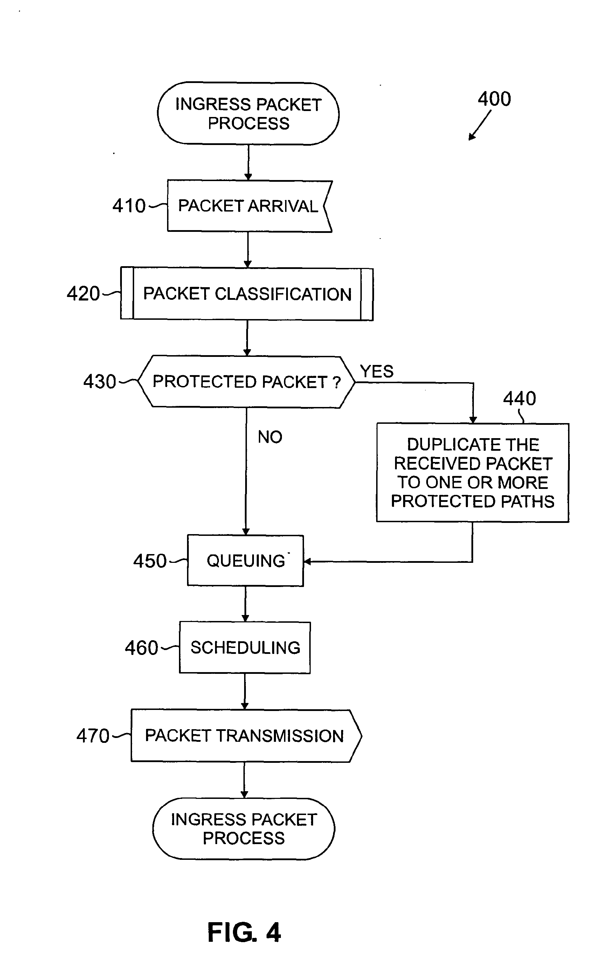

The processes implemented by the network processors 310, 340, as appropriate for ingress and egress paths are discussed further below in conjunction with FIGS. 4 through 6. Generally, the network processors 310, 340 implement detection, management, duplication and protection functions. The network processors 310, 340 may be embodied, for example, using the Agere APP family processor, commercially available from Agere Systems Inc. of Allentown, PA.

For example, as discussed further below in conjunction with FIG. 4, at the subscriber edge access system (MSAN 170), classification techniques are used to select the protected service flows, for example, according to layer 4 attributes, such as IP address, UDP port or RTP/TCP session information. The flow is duplicated across two diverse logical connections 360, 370 and optionally aggregated with similar services for transport through the access network. Traffic management ensures prioritization of the fault sensitive services ahead of non-fault sensitive traffic. It is assumed that the network has underlying mechanisms in place that enable the establishment of fully or partially separate (depending on the network requirements) primary and secondary paths. For example, in a DSLAM, the existing ability to transport data (via, for example, load-sharing) over two separate network paths can be leveraged to carry the duplicate data, while the remainder of each path could be used to carry unprotected traffic.

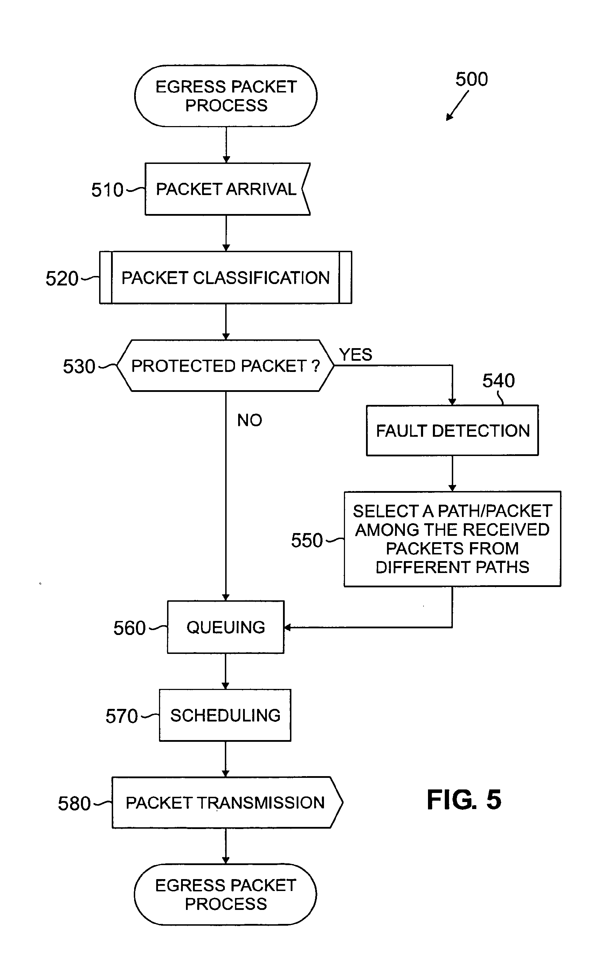

Similarly, as discussed further below in conjunction with FIG. 5, at the service edge access system, classification is used to detect the protected services within a group of flows. The traffic management and policing engines are used to select the "good" service using, for example, layer 3 and 4 information that includes Operation, Administration, & Management (OA&M), packet count, sequence number, and timestamp. The "good" flow is then forwarded, while the duplicate packets are discarded. Thus, at the terminating end of the protected flow, the router 150 normally accepts traffic from the primary flow 360 and discards traffic from the secondary flow 370. However, in the event of a network failure, the router can detect the disruption in the primary path 360 and rapidly switch over to the secondary path 370.

It is noted that the intermediate network and its constituent elements are not "aware" of the protection scheme that is running on each end 170, 150 of the connection. Therefore, there is no change required to those elements in order to upgrade network endpoints to UA. As long as the network can be provisioned to accommodate separate primary and secondary paths 360, 370 (e.g. MPLS label switched paths or ATM virtual circuits). Thus, the protocol and transport agnostic techniques of the present invention can be applied across multiple, heterogeneous networks as long as there is a way to provision end-to-end paths for the primary and secondary flows.

The network processor 340 performs the handling of the data path, such as protocol encapsulation and forwarding. A control processor (not shown) handles corresponding functions of the control path. It is noted that the network processor 310, 340 can be integrated with the control processor. As discussed further below in conjunction with FIG. 4, the network processor 340 provides several important data path functions in an MSAN 170. First, a network processor 340 classifies the incoming subscriber data in order to determine if a flow is protected. Classification here implies the inspection of bits, typically part of a packet header, that uniquely identify a packet flow (e.g. IP header and UDP port number). Once a protected flow is identified, the network processor 340 must assign the flow a proper priority and buffer the flow to be scheduled to both the primary and secondary paths 360, 370. The prioritization is important because it allows the protected packets to be given precedence over the unprotected packets.

The primary and secondary paths 360, 370 of a protected flow are transmitted over two distinct physical paths transparently (i.e., without the knowledge of the intermediate equipment) until they reach a corresponding network element 150 where the flow protection is terminated. At this point, a network processor 310 again must use classification in order to identify the protected flows. Under normal operating conditions, the network processor 310 will keep only the primary flows and discard the secondary flows. If the network processor 310 detects a network outage on the primary flow 360, it will immediately switch over to the secondary flow 370, keeping all the data that arrives on those flows and discarding any duplicated data that may arrive on the primary flow, until network management mechanisms (outside the scope of the present invention) command the system to switch back to the primary flow, typically after notification has been made to the network management system and the fault has been repaired.

When a switchover has occurred, the next step will optionally be to notify the far end receiver on the same flow so that it can switch over to the secondary path. In theory, it could continue to operate on its primary path if the outage was only in one direction. However, most network operations systems expect active flow "pairs" to appear on the same path through the network. There are a variety of suitable options for notifying the far end of an outage. For example, if the criteria on which the protection switch is made depends on the sequence numbering of packets, then the sequence numbers could be "jammed" to incorrect values to force a switchover. Alternatively, if the protection switch simply depends on the presence of packets on the primary flow, the near-end transmitter could temporarily "block" the packets on the primary flow in order to force the far-end receiver to switchover.

The above two mechanisms take advantage of data-path notification (which is typically the fastest option). Alternatively, a control/management plane message could be propagated to the network managements system to notify the far end that it must perform switchover on it's receive path. Note that since switchover may cause disruption of the data flow (depending on the algorithm used), it may indeed be desirable not to switchover unless there is an actual failure. Again, the network operator must decide based on their specific requirements. The programmable nature of the network processor 310, 340 permits any of these mechanisms to be easily supported.

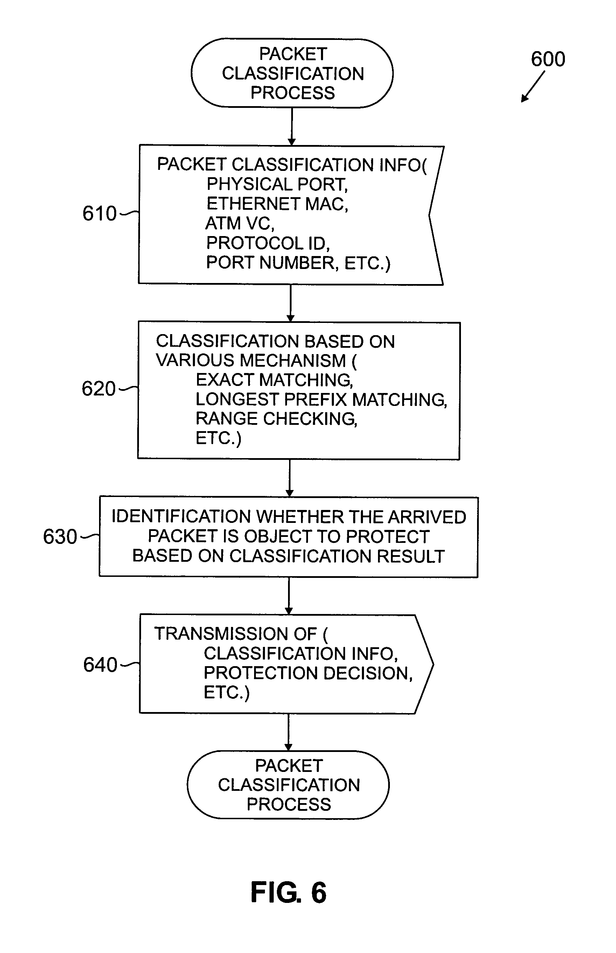

FIG. 4 is a flow chart describing an exemplary implementation of a transmit process 400 performed by an ingress network processor 340. As shown in FIG. 4, the transmit process 400 is initiated during step 410 upon the arrival of a packet. The transmit process 400 invokes the packet classification subroutine 600 (FIG. 6) during step 420 to determine if the received packet should be protected. A test is performed during step 430 to determine if the packet classification subroutine 600 determined that the received packet should be protected. If the received packet should be protected, the transmit process 400 duplicates the received packet to one or more protected paths during step 440 (for example, by setting flags to trigger a multi-cast to multiple locations).

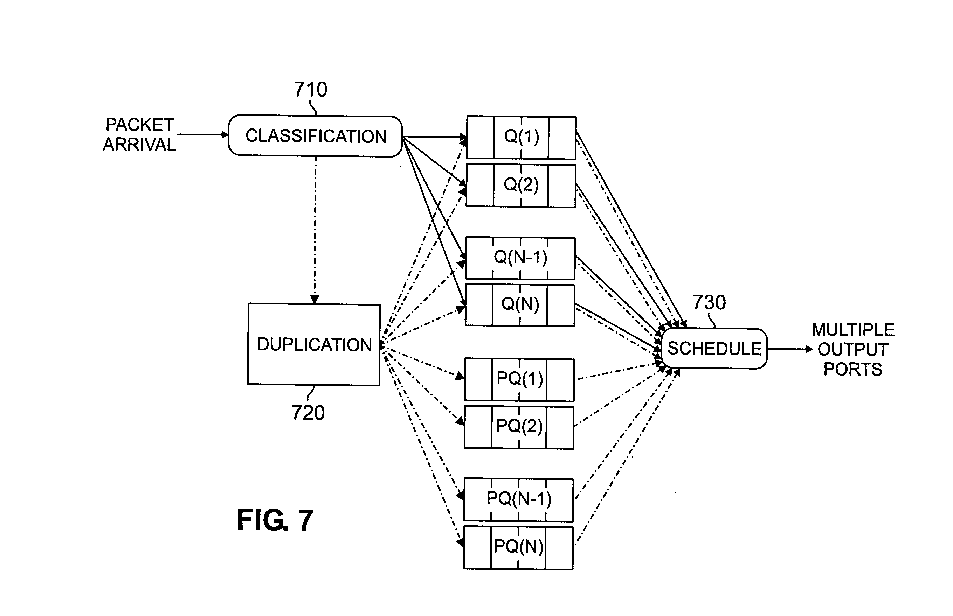

The multi-cast or uni-cast packets are then queued during step 450. The transmit process 400 then implements a scheduling routine during step 460 to select the next packet based on predefined priority criteria. The packets are then transmitted to the access network 160 during step 470. The scheduling and queueing of protected packets is discussed further below in conjunction with FIG. 7.

FIG. 5 is a flow chart describing an exemplary implementation of a receive process 500 performed by an egress network processor 310. As shown in FIG. 5, the receive process 500 is initiated during step 510 upon the arrival of a packet. The receive process 500 invokes the packet classification subroutine 600 (FIG. 6) during step 520 to determine if the received packet is protected. A test is performed during step 530 to determine if the packet classification subroutine 600 determined that the received packet is protected. If the received packet is protected, the receive process 500 implements a fault detection procedure during step 540 to detect if a fault occurs. For example, the receive process 500 can evaluate the time stamp and sequence numbers in the packet headers to detect a fault. In a further variation, the receive process 500 can maintain a packet count for each of the primary and secondary flows and detect a fault if the difference between the counts exceeds a predefined threshold.

A path or packet is selected during step 550 from among the received packets. For example, if a fault is detected during step 540, a switchover to the secondary path can be triggered. In a further variation, the earliest arriving packet among the various flow can be selected. The selected packets are then queued during step 560. The receive process 500 then implements a scheduling routine during step 570 to select the next packet based on predefined priority criteria. The packets are then transmitted to the core network 140 during step 580.

FIG. 6 is a flow chart describing an exemplary implementation of a packet classification subroutine 600 that is invoked by the transmit process 400 and receive process 500 of FIGS. 4 and 5, respectively. While FIG. 6 describes exemplary techniques for classifying an incoming packet and determining whether an incoming packet should be protected, additional classification techniques could be employed, as would be apparent to a person of ordinary skill in the art. As shown in FIG. 6, the packet classification subroutine 600 initially obtains packet classification information associated with the packet during step 610, such as physical port information, Ethernet MAC address, ATM virtual circuit identifier, protocol identifier (for example, for encapsulated protocols) or port number. In one variation, the socket (port number and source/destination information) is used to describe the service and subscriber and determine whether the service flow should be protected.

Thereafter, the packet classification subroutine 600 classifies the packet during step 620, for example, based on one or more techniques, such as exact matching, longest prefix matching or range checking. In one illustrative implementation, the classification is based on the following packet header information: Input/Output physical interface number; Ethernet MAC Source/Destination Address, IP Source/Destination Addrress, Protocol identifier and TCP/UDP Port Number. A determination is made during step 630 as to whether the packet should be protected and the result is sent to the calling process 400, 500 during step 640.

FIG. 7 illustrates the scheduling and queueing of protected packets in accordance with one embodiment of the invention. As shown in FIG. 7, an incoming packet is classified by the packet classification subroutine 600 at stage 710 to determine if the packet should be protected by the present invention. If a packet is not protected, the packet is merely applied to the queue for uni-cast as shown by the solid lines. If a packet is to be protected, a duplication stage 720 performs a multi-cast of the protected packets to at least two distinct flows, as shown by the dashed lines. In this manner, protected packets are duplicated to pairs of multicast queues.

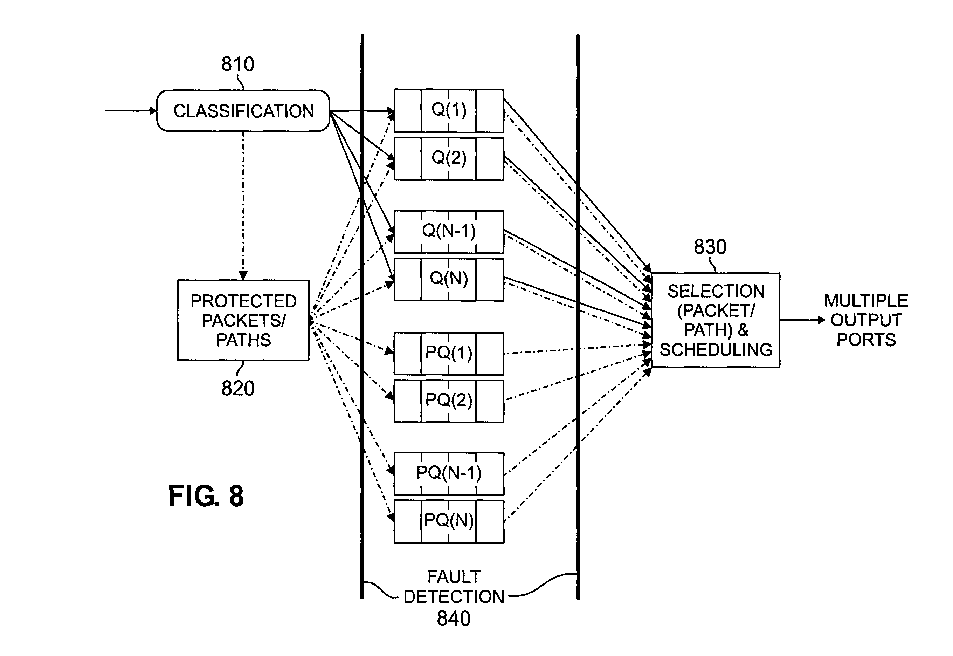

FIG. 8 illustrates the detection of a fault for protected packets in accordance with one embodiment of the invention. As shown in FIG. 8, the receive process 500 classifies an incoming packet using the packet classification subroutine 600 at stage 810 to determine if the packet is protected by the present invention. If an incoming packet is not protected, it can be applied directly to a queue, as shown by the solid lines. If a packet is protected, the duplicate versions of the protected packets are applied to the queue associated the appropriate flow at stage 820. A selection and scheduling stage 830 selects one version of each packet that is then transmitted. If a fault is detected at stage 840, a switchover from a primary path to a secondary path may be triggered.

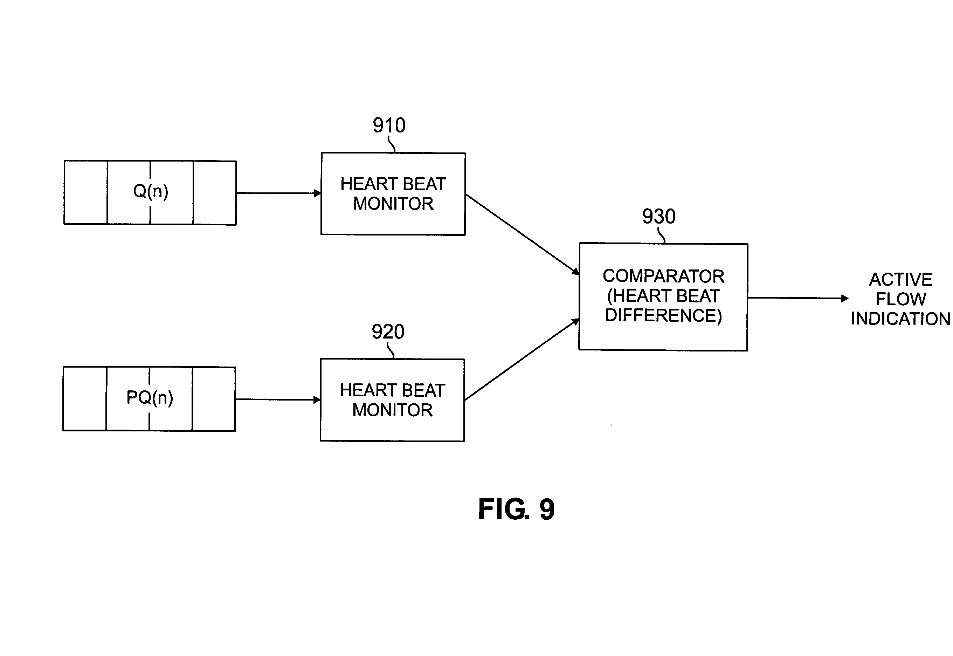

FIG. 9 is a flow diagram illustrating the detection of a fault for protected packets in accordance with one specific embodiment of the invention. As shown in FIG. 9, a heart beat monitor (counter) 910, 920 is maintained for each of two packet flows, Q and PQ, respectively. The heart beat monitor 910, 920 increments the corresponding counter each time a packet is received. A comparator 930 periodically or continuously evaluates the difference value between the two counters and sets an active flow indication (e.g., a flag) as long as packets are being received on each path. Upon detection of a fault, the active flow indication is removed to provide an indication of the detected fault.

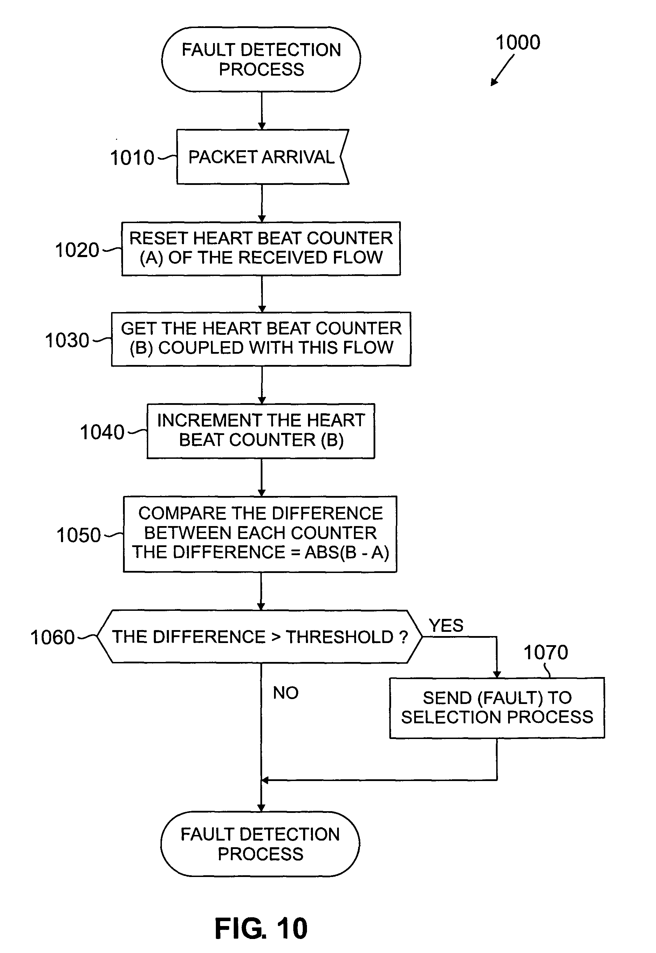

FIG. 10 is a flow chart describing an exemplary fault detection process 1000 incorporating features of the present invention. As shown in FIG. 10, the fault detection process 1000 is initiated during step 1010 upon the arrival of a packet. The heart beat counter of the received flow is reset during step 1020. The heart beat counter for the associated alternate (or duplicate) flow is identified during step 1030 and incremented during step 1040. The difference between the counters is evaluated during step 1050.

A test is performed during step 1060 to determine if the difference exceeds a predefined threshold. If it is determined during step 1060 that the difference exceeds the predefined threshold, then a notification of the fault is sent during step 1070. If, however, it is determined during step 1060 that the difference does not exceed the predefined threshold, then program control terminates. In this manner, the counter for a flow Q can only be reset by the heart beat monitor associated with flow Q and can only be incremented by the alternate flow PQ. The fault detection process 1000 assumes that if a packet is received, the path is still valid.

Network Resilience and Protection

Resilience refers to the ability of a network to keep services running despite a failure. Resilient networks recover from a failure by repairing themselves automatically. More specifically, failure recovery is achieved by rerouting traffic from the failed part of the network to another portion of the network. Rerouting is subject to several constraints. End-users want rerouting to be fast enough so that the interruption of service time due to a link failure is either unnoticeable or minimal. The new path taken by rerouted traffic can be computed either before or upon detection of a failure. In the former case, rerouting is said to be pre-planned. Compared with recovery mechanisms that do not pre-plan rerouting, pre-planned rerouting mechanisms decrease interruption of service times but may require additional hardware to provide redundancy in the network and consume valuable resources like computational cycles to compute backup paths. A balance between recovery speed and costs incurred by pre-planning is required.

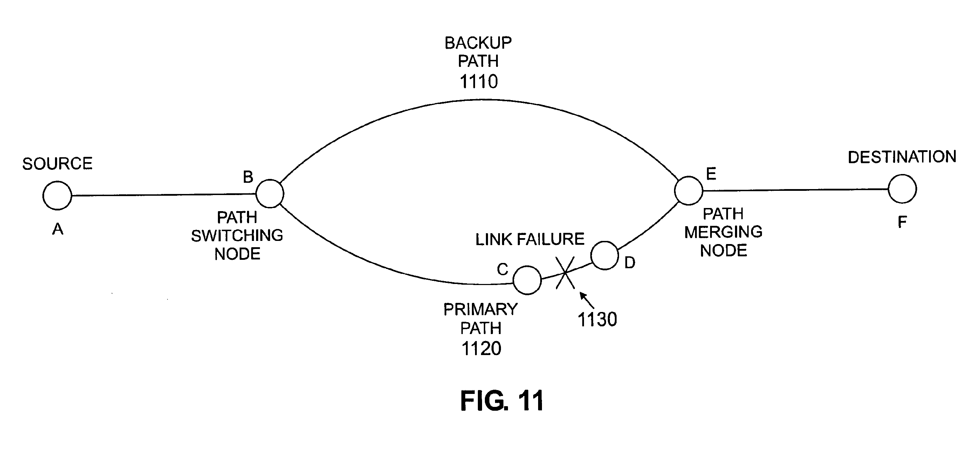

FIG. 11 illustrates the rerouting of traffic between source and destination nodes A and B on the primary path 1120 over a backup path 1110 when a link C-D fails at a point 1130. Rerouting can be used in both Circuit Switching and Packet Switching networks. When a link in a network fails, traffic that was using the failed link must change its path in order to reach its destination. The traffic is rerouted from a primary path 1120 to a backup path 1110. The primary path 1120 and the backup path 1110 can be totally disjoint or partially merged.

FIG. 11 presents an example where a source node A sends traffic to a destination node F, and where a link C-D on the primary path fails. A complete rerouting technique consists of the following seven steps:

1) Failure Detection;
2) Failure Notification;
3) Computation of backup path (before or after a failure);
4) Switchover of "live" traffic from primary to secondary path;
5) Link repair detection;
6) Recovery notification; and
7) Switchover of "live" traffic secondary to primary.

Steps 1 through 4 concern rerouting after a link has failed to switch traffic from the primary path 1120 to the backup path 1110, while steps 5 through 7 concern rerouting after the failed link has been repaired to bring back traffic to the primary path.

First, the network must be able to detect link failures. Link failure detection can be performed by dedicated hardware or software by the end nodes C and D of the failed link. Second, nodes that detect the link failure must notify certain nodes in the network of the failure. Which nodes are actually notified of the failure depends on the rerouting technique. Third, a backup path must be computed. In pre-planned rerouting schemes, however, this step is performed before link failure detection. Fourth, instead of sending traffic on the primary, failed path, a node called Path Switching Node must send traffic on the backup path. This step in the rerouting process is referred to as switchover. Switchover completes the repairing of the network after a link failure.

When the failed link is physically repaired, traffic can be rerouted to the primary path, or keep being sent on the backup path. In the latter case, no further mechanism is necessary to reroute traffic to the primary path while three additional steps are needed to complete rerouting in the former case. First, a mechanism must detect the link repair. Second, nodes of the network must be notified of the recovery, and third the Path Switching Node must send traffic back on the primary path in the so-called switchback step.

Consider a unicast communication. When a link of the path between the sender and the receiver fails, users experience service interruption until the path is repaired. The length of the interruption is the time between the instant the last bit that went through the failed link before the failure is received, and the instant when the first bit of the data that uses the backup path after the failure arrives at the receiver. Let $T_{Detect}$ denote the time to detect the failure, $T_{Notify}$ the notification time, $T_{Switchover}$ the switchover time, and $d_{ij}$ the sum of the queuing, transmission and propagation delay needed to send a bit of data between two nodes i and j. Then, for the example given in FIG. 11, the total service interruption time for the communication $T_{Service}$ is given by:

$$T_{Service} = T_{Detect} + T_{Notify} + T_{Switchover} + (d_{BE} - d_{EF}) - (d_{DE} - d_{EF}) \qquad (1)$$

The quantity $(d_{BE} - d_{EF}) - (d_{DE} - d_{EF})$ does not depend on the rerouting technique but rather on the location of the failure. Therefore, we define the total repair time $T_{Repair}$ which only depends on the rerouting mechanism by:

$$T_{Repair} = T_{Detect} + T_{Notify} + T_{Switchover} \qquad (2)$$

The total repair time is the part of the service interruption time that is actually spent by a rerouting mechanism to restore a communication after a link has failed.

Protection at the MAC and Physical Layers: Self-Healing Rings

A ring network is a network topology where all nodes are attached to the same set of physical links. Each link forms a loop. In counter rotating ring topologies, all links are unidirectional and traffic flows in one direction on one half of the links, and in the reverse direction on the other half. Self-healing rings are particular counter rotating ring networks which perform rerouting as follows. In normal operation, traffic is sent from a source to a destination in one direction only. If a link fails, then the other direction is used to reach the destination such that the failed link is avoided. Self-healing rings require expensive specific hardware and waste up to half of the available bandwidth to provide full redundancy. On the other hand, lower layer protection mechanisms are the fastest rerouting mechanisms available as self-healing rings can reroute traffic in less than 50 milliseconds. Examples of such self-healing rings include the following four MAC and physical rerouting mechanisms which all rely on a counter rotating ring topology:

- SONET UPSR Automatic Protection Switching;
- SONET BLSR Automatic Protection Switching;
- Fiber Distributed Data Interface (FDDI) protection switching; and
- RPR Intelligent Protection Switching.

Network Layer Protection

Packet switching networks, such as the Internet, are inherently resilient to link failures. Routing protocols take topology changes into account, such as a link failure, and recompute routing tables accordingly using a shortest path algorithm. When all routing tables of the network are recomputed and have converged, all paths that were using a failed link are rerouted through other links. However, convergence is fairly slow and takes usually several tens of seconds. This is due, at least in part, to the timers used by routing protocols to detect link failure with coarse granularity (1 second) making the $T_{Detect}$ term in Equation (2) large compared with lower layer rerouting mechanisms. Second, all routers in the network have to be notified of the failure. Propagating notification messages is done in an order of magnitude of tens of millisecond which makes $T_{Notify}$ negligible compared with $T_{Detect}$. Indeed, routers only need to forward the messages with no additional processing. Finally, routing tables have to be recomputed before paths are switched. Recomputing routing tables implies using CPU intensive shortest path algorithms which can take a time $T_{Switchover}$ of several hundred milliseconds in large networks.

Recently, claims have been made that it is possible to perform IP rerouting in less than one second by shrinking the $T_{Detect}$ and $T_{Switchover}$ terms of Equation (2). The methods propose to use subsecond timers to detect failures and decrease the value of the $T_{Detect}$ term. Further, it is suggested that routing convergence is slow due to the obsolescence of the shortest path algorithms employed in current routing protocols which would be able to recompute routing tables at the millisecond scale if faster, more modem algorithms were used. Expected rerouting times in networks using modified routing protocols can perhaps take less than a second under favorable conditions, but implementation of guidelines required to reach milliseconds restoration time require major modifications in current routing algorithms and routers.

System and Article of Manufacture Details

As is known in the art, the methods and apparatus discussed herein may be distributed as an article of manufacture that itself comprises a computer readable medium having computer readable code means embodied thereon. The computer readable program code means is operable, in conjunction with a computer system, to carry out all or some of the steps to perform the methods or create the apparatuses discussed herein. The computer readable medium may be a recordable medium (e.g., floppy disks, hard drives, compact disks, or memory cards) or may be a transmission medium (e.g., a network comprising fiber-optics, the world-wide web, cables, or a wireless channel using time-division multiple access, code-division multiple access, or other radio-frequency channel). Any medium known or developed that can store information suitable for use with a computer system may be used. The computer-readable code means is any mechanism for allowing a computer to read instructions and data, such as magnetic variations on a magnetic media or height variations on the surface of a compact disk.

The computer systems and servers described herein each contain a memory that will configure associated processors to implement the methods, steps, and functions disclosed herein. The memories could be distributed or local and the processors could be distributed or singular. The memories could be implemented as an electrical, magnetic or optical memory, or any combination of these or other types of storage devices. Moreover, the term "memory" should be construed broadly enough to encompass any information able to be read from or written to an address in the addressable space accessed by an associated processor. With this definition, information on a network is still within a memory because the associated processor can retrieve the information from the network.

It is to be understood that the embodiments and variations shown and described herein are merely illustrative of the principles of this invention and that various modifications may be implemented by those skilled in the art without departing from the scope and spirit of the invention.

**Claims**

1. A method for protecting data in a packet network, said method comprising the steps of:

   classifying a received packet based on information in a header portion of said packet, said classifying step employing one or more rules to determine whether said received packet should be protected; and
   transmitting said received packet on at least two paths if said packet classification determines that said received packet should be protected.

2. The method of claim 1, wherein said one or more rules determine whether a service associated with said received packet should be protected.

3. The method of claim 1, wherein said one or more rules determine whether a subscriber associated with said received packet should be protected.

4. A method for protecting data in a packet network, said method comprising the steps of:

   classifying a received packet based on information in a header portion of said received packet, said classifying step employing one or more rules to determine whether said received packet is a protected packet having at least one additional version; and
   transmitting only one version of said received packet if said packet classification determines that said received packet is a protected packet.

5. The method of claim 4, wherein one version of said received packet is received on a primary path and said at least one additional version is received on a secondary path and wherein said method further comprises the step of switching over to said secondary path if a fault is detected on said primary path.

6. The method of claim 4, further comprising the step of detecting a fault on a path associated with one of said versions of said received packet.

7. A network processor operative to:

   classify a received packet based on information in a header portion of said packet based on one or more rules to determine whether said received packet should be protected; and
   transmit said received packet on at least two paths if said packet classification determines that said received packet should be protected.

8. A network processor operative to:

   classify a received packet based on information in a header portion of said received packet based on one or more rules to determine whether said received packet is a protected packet having at least one additional version; and
   transmit only one version of said received packet if said packet classification determines that said received packet is a protected packet.

9. A multi-service access node, comprising:

   one or more ports for receiving packets from one or more subscribers; and
   a network processor operative to:

      classify a received packet based on information in a header portion of said packet based on one or more rules to determine whether said received packet should be protected; and
      transmit said received packet on at least two paths if said packet classification determines that said received packet should be protected.

10. A router in a packet network, comprising:

    one or more ports for receiving packets; and
    a network processor operative to:

       classify a received packet based on information in a header portion of said received packet based on one or more rules to determine whether said received packet is a protected packet having at least one additional version; and
       transmit only one version of said received packet if said packet classification determines that said received packet is a protected packet.

FIG. 1

PORTABLE COMPUTING/
INTERNET
210-1

WIRELESS
TELEPHONE
210-2

BROADBAND
PHONE
210-3

SUBSCRIBER
HUB
200

EMAIL/
MESSAGING
210-4

FIG. 2

**FIG. 3**

INGRESS PACKET
PROCESS

410 — PACKET ARRIVAL

420 — PACKET CLASSIFICATION

430 — PROTECTED PACKET ?

YES

NO

440

DUPLICATE THE
RECEIVED PACKET
TO ONE OR MORE
PROTECTED PATHS

450 — QUEUING

460 — SCHEDULING

470 — PACKET TRANSMISSION

INGRESS PACKET
PROCESS

400

**FIG. 4**

EGRESS PACKET
PROCESS

510 — PACKET ARRIVAL

520 — PACKET CLASSIFICATION

530 — PROTECTED PACKET ?

YES

NO

540

FAULT DETECTION

550 — SELECT A PATH/PACKET
AMONG THE RECEIVED
PACKETS FROM
DIFFERENT PATHS

560 — QUEUING

570 — SCHEDULING

580 — PACKET TRANSMISSION

EGRESS PACKET
PROCESS

500

**FIG. 5**

FIG. 6

EP 1 608 116 A1

**FIG. 7**

**FIG. 8**

810

CLASSIFICATION

820

PROTECTED PACKETS/ PATHS

Q(1)
Q(2)
Q(N-1)
Q(N)
PQ(1)
PQ(2)
PQ(N-1)
PQ(N)

830

SELECTION (PACKET/ PATH) & SCHEDULING

MULTIPLE OUTPUT PORTS

FAULT DETECTION
840

EP 1 608 116 A1

18

**FIG. 9**

EP 1 608 116 A1

1000

```
            ╭─────────────────────╮
            │   FAULT DETECTION   │
            │      PROCESS        │
            ╰─────────────────────╯
                      │
                      ▼
1010 ──┐  ┌─────────────────────┐
       └──│   PACKET ARRIVAL    >
          └─────────────────────┘
                      │
                      ▼
          ┌─────────────────────────┐
1020 ─────│ RESET HEART BEAT COUNTER│
          │ (A) OF THE RECEIVED FLOW│
          └─────────────────────────┘
                      │
                      ▼
          ┌─────────────────────────┐
1030 ─────│ GET THE HEART BEAT COUNTER│
          │ (B) COUPLED WITH THIS FLOW│
          └─────────────────────────┘
                      │
                      ▼
          ┌─────────────────────┐
1040 ─────│  INCREMENT THE HEART│
          │  BEAT COUNTER (B)   │
          └─────────────────────┘
                      │
                      ▼
          ┌─────────────────────────┐
          │ COMPARE THE DIFFERENCE  │
1050 ─────│ BETWEEN EACH COUNTER    │
          │ THE DIFFERENCE = ABS(B - A)│
          └─────────────────────────┘
                      │
                      ▼
```

1060 ── THE DIFFERENCE > THRESHOLD ?   ──YES──┐

1070

NO

```
                          ┌─────────────────────┐
                          │ SEND (FAULT) TO     │
                          │ SELECTION PROCESS   │
                          └─────────────────────┘
```

```
            ╭─────────────────────╮
            │   FAULT DETECTION   │
            │      PROCESS        │
            ╰─────────────────────╯
```

# FIG. 10

FIG. 11

**European Patent Office**

## EUROPEAN SEARCH REPORT

Application Number

EP 05 25 0625

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SAKAI Y ET AL: "A METHOD OF PROTECTING HIGH-PRIORITY PACKETS IN VIDEO PACKET TRANSMISSION" ELECTRONICS & COMMUNICATIONS IN JAPAN, PART I - COMMUNICATIONS, SCRIPTA TECHNICA. NEW YORK, US, vol. 76, no. 3, 1 March 1993 (1993-03-01), pages 66-73, XP000416976 ISSN: 8756-6621 * page 66, column 1, line 7 - line 14 * * page 66, column 2, line 24 - line 27 * * page 67, column 1, line 49 - column 2, line 5 * * page 67, column 2, line 28 - page 68, column 1, line 54 * * page 73, column 1, line 1 - line 34 * * figures 1-3 * ----- | 1-10 | H04L12/56 |
| X | ORDA A ET AL: "PACKET DUPLICATION AND ELIMINATION IN DISTRIBUTED NETWORKS" INTERNATIONAL CONFERENCE ON DISTRIBUTED COMPUTING SYSTEMS. CAMBRIDGE, MASS., MAY 19 - 23, 1986, PROCEEDINGS OF THE INTERNATIONAL CONFERENCE ON DISTRIBUTED COMPUTING SYSTEMS, WASHINGTON, IEEE COMP. SOC. PRESS, US, vol. CONF. 6, May 1986 (1986-05), pages 401-404, XP000758150 * page 401, column 1, line 1 - column 2, line 9 * * page 401, column 2, line 20 - line 21 * * page 401, column 2, line 47 - line 50 * * page 402, column 1, line 52 - column 2, line 1 * * page 403, column 2, line 59 - line 62 * ----- -/-- | 1-10 | **TECHNICAL FIELDS SEARCHED** (Int.Cl.7) H04L |

The present search report has been drawn up for all claims

| Place of search | Date of completion of the search | Examiner |
|---|---|---|
| Munich | 15 April 2005 | Schrembs, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 25 0625

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | US 6 831 898 B1 (EDSALL THOMAS J ET AL) 14 December 2004 (2004-12-14) * column 1, line 5 - line 10 * * column 3, line 5 - line 23 * * figures 1A,4A-D * ----- | 1-10 | |
| A | US 2003/161303 A1 (MEHRVAR HAMID R ET AL) 28 August 2003 (2003-08-28) * page 1, column 1, line 15 - line 20 * * page 1, column 1, line 34 - line 36 * * page 1, column 2, line 5 - line 56 * * page 2, column 1, line 5 - line 10 * * claims 1,18 * * figures 2-4 * ----- | 1-10 | |
| | | | **TECHNICAL FIELDS SEARCHED (Int.Cl.7)** |

The present search report has been drawn up for all claims

| Place of search | Date of completion of the search | Examiner |
|---|---|---|
| Munich | 15 April 2005 | Schrembs, G |

EPO FORM 1503 03.82 (P04C01)

EP 1 608 116 A1

## ANNEX TO THE EUROPEAN SEARCH REPORT
## ON EUROPEAN PATENT APPLICATION NO.

EP 05 25 0625

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2005

| Patent document cited in search report | Publication date | Patent family member(s) | Publication date |
|---|---|---|---|
| US 6831898 B1 | 14-12-2004 | NONE | |
| US 2003161303 A1 | 28-08-2003 | NONE | |

EPO FORM P0459

For more details about this annex : see Official Journal of the European Patent Office, No. 12/82

24